# EUROPEAN PATENT SPECIFICATION

(11) **EP 3 553 206 B1**
(45) Date of publication and mention of the grant of the patent: **03.08.2022**
(21) Application number: 17913286.5
(22) Date of filing: 15.06.2017
(51) Int. Cl.: C25C 3/14, B23K 10/00, B23K 9/013

(54) **METHOD FOR BREAKING ELECTROLYTE CRUST BY PLASMA CUTTING**
VERFAHREN ZUM BRECHEN EINER ELEKTROLYTKRUSTE DURCH PLASMASCHNEIDEN
PROCÉDÉ DE DESTRUCTION D'UNE CROÛTE D'ÉLECTROLYTE PAR COUPE DE SÉPARATION AU PLASMA

(43) Date of publication of application: 16.10.2019
(73) Proprietor: Obshchestvo s Ogranichennoy Otvetstvennost'yu "Obedinennaya Kompaniya Rusal Inzhenerno-Tekhnologicheskiy Tsentr", Krasnoyarsk 660111 (RU)
(72) Inventor: MANN, Viktor Khrist'yanovich, Krasnoyarsk 660111 (RU); SHTEFANYUK, Yurij Mikhajlovich, Krasnoyarsk 660111 (RU); PINGIN, Vitalij Valer'evich, Krasnoyarsk 660111 (RU); PETROV, Aleksandr Mikhajlovich, Krasnoyarsk 660111 (RU); MUKHANOV, Sergej Mikhajlovich, Krasnoyarsk 660111 (RU)
(74) Representative: Tobiasz-Dumania, Katarzyna
(86) International application number: PCT/RU2017/000417
(87) International publication number: WO 2018/231088

(56) References cited:
- EP-A1- 2 466 591
- WO-A1-2012/136262
- CN-A- 102 689 100
- CN-U- 203 049 050
- JP-A- S58 110 618
- RU-A- 2013 149 331
- RU-C1- 2 127 179
- RU-C1- 2 141 393
- RU-C2- 2 265 084
- RU-U1- 37 334
- RU-U1- 99 371
- SU-A1- 766 777
- US-A- 3 663 411
- US-A- 4 649 858

## Description

The present invention relates to aluminum production from molten salts, more particularly, to the process of breaking an electrolyte crust in reduction cells of all types with the use of a directed jet of thermal plasma.

In a production of aluminum from molten salts by the electrolysis of cryolite-alumina melts, on a surface of a melt in an "edge-anode" space a solid crust is formed, and according to process requirements, this crust is required to be periodically broken. Electrolyte crust breaking is one of the main operations of a technological processing cycle for a reduction cell for production of aluminum. There are plenty devices designed for breaking an electrolyte crust which by the way of their action on an electrolyte crust can be classified into impact, vibration and pushing devices; by the way of bringing into action they can be classified into pneumatic, electrical devices and devices with an internal combustion engine.

A device structure is selected based on a reduction cell type; however, in a vast majority of cases machines are equipped with impact mechanisms.

It is known a method for breaking an electrolyte crust in the electrolytic production of primary aluminum, which includes breaking a crust with at least one breaker moving cyclically in a vertical direction, each breaker is secured to a piston rod of a pneumatic cylinder which has a working chamber and a piston-rod-side chamber, wherein the crust is broken when the breaker performs a working stroke driven by the supply of compressed air into the working chamber of the pneumatic cylinder from a pressure line whilst connecting the piston-rod-side chamber with an exhaust line, after which the breaker is returned into its initial position by compressed air supplied into the piston-rod-side chamber from the pressure line whilst connecting the working chamber with the exhaust line, wherein the compressed air from the pressure line is supplied to the working chamber and the piston-rod-side chamber of the cylinder at a lower flow rate than during the removal of air from these chambers into the exhaust line, wherein the ratio between said flow rates is selected on the basis of a condition of the sufficient kinetic energy of the breaker and the desired energy efficiency (the RU Patent application No 2002110742, C25C 3/06, published on 20.12.2003).

The drawbacks of this method include challenges in the implementation thereof, immobile arrangement on a reduction cell and, consequently, the risk of crust breakage only at points where it is installed.

It is known a device (the inventor's certificate USSR SU 1135812, C25C 3/14) for breaking an electrolyte crust comprising a breaker actuator connected to a bracket via a lever system implemented in the form of a parallel crank mechanism. The device is provided with a crank breaker mounted in a cantilevered manner on the bracket having a hydraulic cylinder for lifting thereof, wherein both chambers of the hydraulic cylinder are connected to spring hydraulic shock absorbers. The crank mechanism is connected to the actuator of a belt drive. A dynamic force, which the machine develops when the breaker is at its peak, is defined by actuator power and power-intensity of flywheels mounted on a crank axle. This force is high enough to break a crust even at end faces of a reduction cell where the crust strength is 2-3 times higher than at longitudinal sides.

The drawbacks of this device include that the overall dimensions of a working member of the device with cumbersome flywheels and a massive sealed housing of the breaker constrain the use thereof for processing anode end faces of the reduction cell.

Also, it is known a device for breaking an electrolyte crust comprising a self-propelled trolley with a vertical frame mounted on the side which is provided with a boom configured to be lifted, lowered and extended forward, and a vibrohammer (RU Patent No.2128248, IPC C25C 3/14, published on 27.03.1999).

The drawback of this device is in that it takes too long for the vibrohammer to break this electrolyte crust.

The closest to the suggested method is a method and device for breaking an electrolyte crust in a reduction cell for production of aluminum (RU Patent No. 2265084, IPC C25C 3/14, published on 10.07.2005), including applying by a breaker an impact force to a crust, wherein together with the impact force the breaker is subjected to a pushing force of 300-1000 kg. The device for breaking an electrolyte crust at end faces of a reduction cell for production of aluminum comprises a self-propelled trolley with a vertical frame mounted on a side provided with a boom configured to be lifted, lowered and extended forward, and a vibrohammer, a counterweight of 500-1000 kg is attached to the self-propelled trolley on a side opposite to the frame.

The drawback of this method is in that the device structure makes it difficult to use it for the electrolyte crust breakage along the anode longitudinal sides of the reduction cell.

Another analog of the device is described in the inventor's certificate of USSP SU 387032, IPC C25C 3/14, 1971), where a device is made in the form of an articulated mechanism consisted of two parallelograms provided with independent hydraulic actuators, one of which is mounted on a support, and on an end of the second one a pneumatic breaker is mounted. A working member of the device is made compact thanks to which it can be used for processing not only longitudinal sides but also end faces of a reduction cell, wherein a distance between metal structures of the device limit the height of the working member by 650-700 mm and the width by 200-250 mm.

However, the productivity is dramatically reduced if this device is used for breaking an alumina crust since the pneumatic breaker has a low impact energy which significantly increases time and energy costs.

The main drawback which is common for all mentioned above devices is in that during the crust breakage process many pieces of a solid covering material (electrolyte) get into a reduction cell. This, in turn, negatively affects technological, technical and economic characteristics of a reduction cell, namely:
- to remove the crust pieces from the electrolyte additional time is required;
- to heat-up and re-melt raw materials additional power costs are required;
- the amount of recycle raw materials is increased.

EP 2466591 (A1) discloses a remotely controllable handling device for handling material in a cell having a base module comprising a frame supporting: connector means for support of the handling device by a support structure outside the cell such as a crane via a flexible link member (rope or chain); extendable fixing means able to engage the walls of a cell for blocking said handling device in place; a tool support; at least one tool unit mounted to said tool support; and a vision member. The preferred embodiment, according to Fig.6, shows a tool unit comprising a cutting tool for opening the canisters by cutting their top lid or cut damaged canister parts. The cutting tool may e.g. be a plasma torch. The use of a plasma torch requires a good positioning accuracy, whereby three degrees of freedom have been provided to the tool unit; but contrary to the gripping tool no loads have to be picked up and therefore the size of the actuators and mechanical components can be reduced. The apparatus (plasma torch) for the plasma-arc cutting of canister lids (i.e. the operation of the cutting head) is based on using a direct-action air-plasma arc only.

CN 102169100 (A) discloses an autonomous mobile robot system for plasma metal-inert-gas (MIG) composite welding. The system comprises a robot body, a control system and a plasma MIG composite welding system, wherein the robot body comprises a crawling mechanism and an operating mechanism; the control system comprises a sensing system, a robot body control box and a robot master control system; and the plasma MIG composite welding system comprises a digitized MIG welding power supply, a plasma power supply, a wire feeding machine, shielding gas, a plasma welding gun and an MIG welding gun.

JP 58110618 (A) discloses a process for remelting of the inside surface of a steel pipe by using the plasma jets generated under prescribed conditions while moving either of the steel pipe and a plasma jet torch. Plasma jets are generated under the conditions of Ar contg. 5-20% H₂ as a shielding gas, pure Ar as a plasma gas, 1-2 1/min flow rate of the plasma gas, and 100-400A electric current. Under the injection of the jets, a torch is moved in the axial direction of a steel pipe which is not in rotation. The torch is stopped, and the pipe is rotated by as much as the width melted by the plasma gas. After the rotation of the pipe is stopped, the torch is moved in the direction opposite from the above-mentioned direction. The torch is stopped, then the pipe is rotated in the same direction and at the same angle as mentioned above, and the above-mentioned operations are repeated. The opposed parts of the inside surface of the pipe facing the torch are remelted successively.

US 4649858 relates to a repairing apparatus for an industrial furnace wall using a plasma spray gun. The plasma flame of the gun traces the damaged part to be repaired by moving the gun in three-dimensional directions (up-and downwardly, right-and leftwardly, and forwardly and backwardly) relative to the furnace wall to be repaired. Furthermore, the optimum spray distance of the plasma flame follows the unevenness of the furnace wall and the depression extent of a damaged part to be repaired from the sound surface of a furnace wall by changing the mixture ratio of the operation gas for the gun to control the length of the plasma flame.

The object of the present invention is to improve technical and economic characteristics of a reduction cell for production of aluminum by providing an effective method for breaking an electrolyte crust.

The technical effect provided by the invention is in addressing the mentioned object, reducing the amount of broken electrolyte crust, avoiding the formation of electrolyte crust pieces during the breakage process and, consequently, reducing power consumption for heating-up the covering material consisting of a mixture of alumina and crushed electrolyte used to form an electrolyte crust.

The technical effect is provided by that the method for breaking an electrolyte crust by means of separation cutting in a reduction cell for production of aluminum where the crust cutting and breaking includes thermal melting a crust material with a high-speed high-temperature concentrated flow of thermal plasma jet heat energy, for which a directed thermal plasma jet is generated and moved above the electrolyte crust along a predetermined path, a formed molten material is continuously removed from a zone of the thermal plasma jet impact to create in the electrolyte crust a slit with the thermal plasma jet, wherein the slit is enough to perform continuous separation cutting and breaking of the crust.

The difference of the present invention from the analogous solutions is in that the electrolyte crust in an aluminum reduction cell is broken by separation cutting of the electrolyte crust in the result of thermal melting and formation of a slit in the electrolyte crust by means of a thermal plasma jet.

There are two main categories of plasma cutting methods: 1) plasma-arc cutting used for metals and other conductive materials, 2) plasma jet cutting used for various non-conductive materials.

The main field of application of a plasma jet for cutting includes cutting of non-metal, sheet materials of small thickness (less than 5 mm), refractories, ceramics, etc. During cutting, a distance between a surface of a cut metal and an end face of a plasma torch tip must be constant. An arc is pointed downwards and typically at a right angle to the surface of a cut window. An electrolyte crust is non-conductive and it can be cut only with the plasma jet, however, currently, there are no instances of technological application of the plasma jet for the electrolyte crust breakage on existing reduction cells at aluminum plants (including plants in other countries).

The separation cutting of an electrolyte crust with a thermal plasma jet includes local heating an electrolyte crust material, melting and partial evaporation thereof to remove from a cutting zone in the form of a melt and vapor by the dynamic action of the jet. The process of separation cutting and breaking the electrolyte crust with the thermal plasma jet includes two stages: 1) melting a through-hole in a crust at an origin point of a path, 2) separation cutting a crust along a predetermined path.

The hole in the crust can be melted very quickly due to the local action of a high-speed high-temperature concentrated flow of the thermal plasma jet heat energy on the material. Plasma and path parameters are selected based on optimal cutting modes and power consumption. Products resulted from such action include a material melt and vapors which are removed from the hole region above the crust by the flow dynamic action. Immediately after the through-hole is formed, the separation cutting of a crust takes place performed by displacing the thermal plasma jet above a crust surface at a predetermined speed. A turbulent flow pattern of the thermal plasma jet and high temperatures (5000-6000°C) provide highly intensive transfer of heat from the flow to the cut material by means of convective and radiant heat exchange. Rapid heating of the crust material results in its melting and partial evaporation with the continuous removal of the formed melt film and vapors from the area of the jet impact into a space under the crust due to the dynamic action of the high-speed high-temperature flow of the thermal plasma jet.

This method is characterized by specific preferred embodiments to obtain optimal modes of the effective crust cutting and breakage.

Sizes of slits formed in the electrolyte crust are defined by technological processing operations for a reduction cell, wherein the slit width is typically less than 25 mm. The speed of thermal plasma jet above the electrolyte crust is 0.5-2.5 m/min. The distance from a point of plasma jet discharge (a nozzle) to an electrolyte crust surface can be 1-15 mm, a thermal plasma jet width at the discharge point is 3-10 mm, and a jet discharge velocity is 600-1500 mm/sec. These parameters are selected by experiments and shouldn't be considered as limiting. All the disclosed parameters of the method and the exemplary device for implementing said method can be used in more broad or narrow ranges comprised within or outside said ranges.

In the method according to the present invention, a width of a slit formed with the thermal plasma jet in the electrolyte crust across the periphery and on a surface of a reduction cell anode is sufficient for separation cutting and breaking the electrolyte crust.

The above mentioned object is achieved by a device for slit cutting of an electrolyte crust which comprises a working member in the form of an arc plasma torch mounted at a boom end. The plasma torch is a cylindrical device comprising a body made of a heat-, electro- and arc-resistant material. The boom is extended from the plasma torch into a cutting area by means of an articulated manipulator. The manipulator is driven by two actuators or pneumatic cylinders, characterized by the efficient, reliable and accurate performance. The manipulator is configured so that a plasma torch tip "follows" a complex relief on the electrolyte crust surface. Also, the device can be equipped with alternative systems for contactless crust surface scanning. The surface relief can be followed with the use of a tip support, such as a skid or a roller.

In addition to attachments, any available alternative equipment can be used. As a facility where the present invention can be mounted to, a crane, a floor production machine or any other device allowing the use thereof for its intended purpose can be used. This includes automated and robotic complexes with programmed control of a motion, tilt, trajectory, and distance to crust with measurements of required crust parameters, such as a relief, temperature, thickness, chemical composition and so on performed at cutting, e.g., it can be the relief scanning. The idea is in the possible modification and improvement of the device.

Preferably, the plasma cutter of an electrolyte crust operates under unchanged energy parameters. The device operation is ensured by the power of 0.4 kV and compressed air with the pressure of no less than 4 bars. Plasma parameters are selected based on the cutting conditions for a crust having a specific thickness and chemical composition.

Aspects of device and plasma torch structures provide the following:
1. When the plasma torch is moved across an electrolyte crust surface with a complex relief, the distance between a plasma torch tip and the crust is maintained in the range of 1 to 15 mm.
2. A tilt angle of the plasma torch with respect to the electrolyte crust surface can be changed within ±5°.
3. A thermal plasma jet generates in the electrolyte crust a slit with a width up to 25 mm at a velocity up to 2.5 m/min.
4. The separation cutting can be performed for an electrolyte crust with various thicknesses along the cutting path (from 40 to 220 mm) and various melting temperatures (in the range of 950-2000°C depending on a percentage of alumina and electrolyte in the crust).

The distinctive and advantageous feature of the method of the present invention is in that melting and separation cutting processes with simultaneous formation of a split in an electrolyte crust save a lot of power required for electrolyte crust cutting and minimize the amount of recycled raw materials.

The present invention allows breaking the electrolyte crust without the risk of formation of cover material pieces which then can fall into an electrolyte melt. The use of the device reduces the negative impact of anode replacement operations on the MHD (magnetohydrodynamic) stability of reduction cells, reduces the time for clearing a place where a new anode is to be placed from cover material pieces, increases the efficiency of a reduction cell protection, reduces the amount of raw materials, and, consequently, reduces power consumptions for heating and melting the cover material consisting of a mixture of alumina and crushed electrolyte used to form an electrolyte crust across the periphery and on a surface of new anodes.

The implementation of the method is illustrated by the following examples with the use of a jet arc plasma torch as a thermal plasma jet generator.

### Example 1

A thermal plasma jet with a flow rate of a plasma air of 3.2 nm³/h, enthalpy of 12 MJ/kg, having a bulk temperature of 5200°C, a diameter of a discharge nozzle of 6 mm and a discharge rate of 650 m/s. The crust thickness is 50 mm, an average temperature is 500°C. An electrolyte crust is through-cut by moving the nozzle of a plasma torch above a surface at a velocity of 0.5 m/min. The width of the resulted slit is about 10 mm. The path of motion is defined based on conditions for optimal cutting speed and energy consumption.

### Example 2

A thermal plasma jet with a flow rate of a plasma air of 3.0 nm³/h, enthalpy of 16.5 MJ/kg, having a bulk temperature of 5900°C, a diameter of a discharge nozzle of 4 mm and a discharge rate of 1500 m/s. The crust thickness is 70 mm, an average temperature is 500°C. An electrolyte crust is through-cut by moving the nozzle of a plasma torch above a surface at a velocity of 1.2 m/min. The width of the resulted slit is about 6 mm.

The rate of crust separation cutting with a thermal plasma jet is primarily defined by physical and chemical properties of a cut crust material, thickness and temperature. The main characteristics of a thermal plasma jet which determine the intensity of material impact include enthalpy of the thermal plasma jet (MJ/kg), jet discharge rate (m/s), jet width at a discharge point (mm), specific power per jet section (kW/m²) and a distance from the discharge point to a crust surface (mm). Said characteristics are defined by operation parameters of thermal plasma jet generators.

The use of the method according to the invention reduces the negative impact of such technological operation as the anode replacement on the MHD-stability of a reduction cell, reduces the time for rearranging anodes, increases the efficiency of a reduction cell cover, reduces the amount of recycled raw materials, reduces power consumptions for heating the cover material consisting of a mixture of alumina and crushed electrolyte used to form an electrolyte crust across the periphery and on a surface of new anodes.

The technical aspects and operating principles of the device are illustrated by drawings, where:

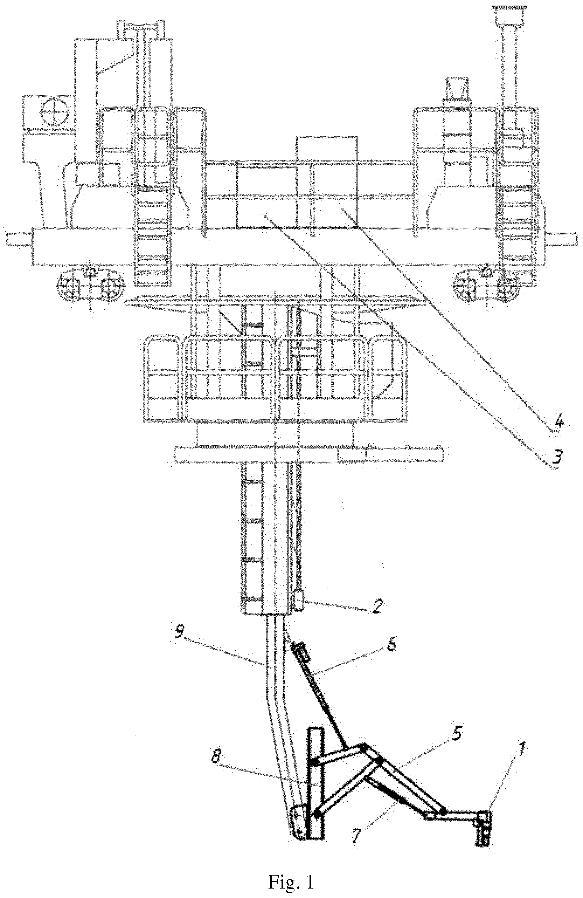

Fig. 1 is a view of a device being used in the present invention,
Fig. 2 is a view of an exemplary plasma torch,
Fig. 3 is a view of a plasma torch with a cutting path.

An attaching device for plasma cutting an electrolyte crust in a reduction cell for production of aluminum comprises following units and parts:
a plasma torch 1 secured to a boom of an articulated manipulator 5, actuators (electromechanical or pneumatic cylinders) 6 and 7 used for driving the manipulator 5 for cutting and extending the boom having the plasma torch 1 secured thereto from the transport position to a working position, and vice versa, respectively. The entire assembly is mounted on a support 8 rigidly secured to an arm of a crane 9. The crust cutting device also comprises: an oscillator 2 for contactless excitation of an electric arc and stabilization during the cutting process, a control and automated control system 3 (ACS - Automatic Control System) and a cooling system 4 for the plasma torch 1. The ACS unit can comprise a controller and data acquisition modules which register signals from instrumentation sensors and control actuation devices, as well as power-supply circuits for the instrumentation and ACS. Also, the device comprises end-position sensors. Further, the device is provided with air flow sensors on the plasma torch, arc voltage sensors of the plasma torch, coolant flow rate sensors. For the secure operation of the device, the ACS system includes several automatic emergency stop commands: - when the coolant flow is reduced to the pre-defined level for preventing the overheating and failure of a nozzle and plasma torch cathode; - when the air flow is reduced below the pre-defined level; - when the arc voltage is reduced below the pre-defined level for preventing the transition of arc burning to a mode where an insulator can be thermally degraded followed by the plasma torch failure.

For security purposes, it is also provided an external button for remote switching off the plasma torch arc in a manual mode which duplicates automatic commands.

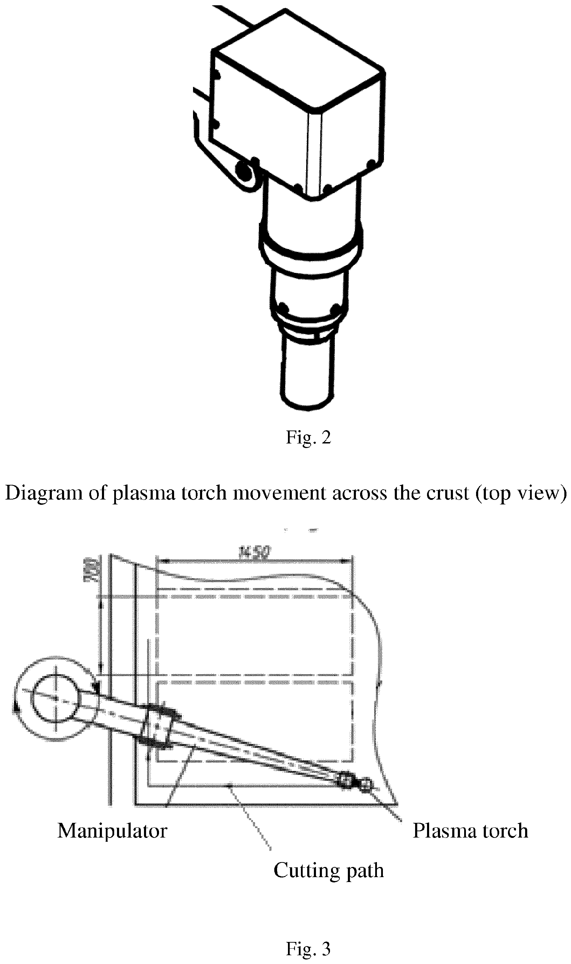

Fig. 3 shows an example of the plasma torch movement over an electrolyte crust.

The device for separation plasma cutting of an electrolyte crust is used as follows:
The device mounted on a crane is transported to a reduction cell where a technological operation - anode replacement - must be performed. A flap cover of the reduction cell is opened near a replaceable anode. Then, a crane arm 9 having a manipulator 5 secured thereto is lowered. An electromechanical actuator 7 extends a boom having a plasma torch 1 secured thereto from a transport position to a working position. Then, the device is moved into the reduction cell above an electrolyte crust surface and is placed into an initial point for cutting at a 1-2 mm distance from the crust surface. A crane operator transmits a command to turn on the device (arc ignition, supplying of plasma gas and coolant) using a remote control panel. Upon igniting a point at the origin of cutting, the plasma torch 1 is automatically moved across the crust surface of a solidified electrolyte along a programmed path. Upon cutting a longitudinal side of a butt, the device is rotated at 90 degrees and cuts a transverse side of the butt, therefore, the cutting path is sufficiently simple. The cutting process is continuously monitored. During the process of electrolyte crust cutting, following parameters are visually monitored: the progress of the cutting process, depth of crust cutting, voltage and current on the plasma torch, flow rate and pressure of compressed air, and pressure, temperature and flow rate of coolant in a cooling system. Monitoring may be carried out by means of corresponding sensors in an automatic mode. It is possible to use protective shields in a cutting zone, as well as supplemental equipment to accelerate and simplify the crust breaking process. The aluminum production process, which takes place in reduction cells having backed anodes, requires replacing the anodes. In order to replace the anode, it is necessary to separate it from a sintered portion of a cover material. Currently, it is usually carried out by means of a pneumatic hammer. The anode butt is cut off along a perimeter, then the butt is removed and arranged on a pallet. Next, butts are transported to a cleaning area where the remaining crust is separated from anode pack residues. The remaining crust is transported to a crushing area where it is ground and reintroduced into the electrolysis process. The area where the butt was located is cleaned from pieces of fallen electrolyte crust. The removed crust is transported to a crushing area, where it is ground and reintroduced into the production process. The anode pack residue is ground and introduced to a new anode production process. The main idea of developments in plasma cutting of electrolyte crust is to avoid using a breaker (a pneumatic hammer).

When an electrolyte crust is cut, the cutting progress and the crust cutting depth is visually or automatically monitored. During the plasma cutting process, a protective shield may or may not be used, because in the process, a plasma jet flow is directed to a space under the crust, and very small amount of particles are ejected. For security purposes, it is also provided an external button for remote switching off the plasma torch arc in a manual mode which duplicates automatic commands. The velocity of jet discharge is of the order 600-1500 mm/sec, wherein the higher the temperature and the thinner the crust is, the higher the velocity will be. Upon completion of a cutting program, the device is turned off and supplying the plasma gas and the coolant is stopped. The device is retracted into the transport position and removed from the cutting zone.

The practical implementation of the invention is tested using a prototype made on the base of the device mounted on the crane. The device has passed the test in an operational facility for aluminum electrolysis at the applicant's plant. The tests have shown that the invention prevents the formation of pieces of solid cover material and penetration thereof into the electrolyte melt. The basic conditions for choosing the method for breaking an electrolyte crust were following: the absence of falling crust pieces into the melt; reducing the depressurization time of a reduction cell; lowering the power consumption for raw material melting.

In the context of technical and economic assessments of the project, the effectiveness of plasma cutting was analyzed in comparison with cutting by means of a jib and rotatory saw cutting, that has confirmed the effectiveness and the usage preference of the plasma cutting.

## Claims

1. A method for breaking an electrolyte crust by means of separation cutting in a reduction cell for production of aluminum, **characterized in that** crust cutting and breaking includes thermal melting a crust material with a high-speed high-temperature concentrated flow of thermal plasma jet heat energy, for which a directed thermal plasma jet is generated and moved above the electrolyte crust along a predetermined path, a formed molten material is continuously removed from a zone of the thermal plasma jet impact to create in the electrolyte crust a slit with the thermal plasma jet, wherein the slit is enough to perform continuous separation cutting and breaking of the crust.

2. The method according to claim 1, **characterized in that** sizes of the slit formed in the electrolyte crust are defined by technological processing operations for the reduction cell, wherein the slit width is less than 25 mm.

3. The method according to claim 1, **characterized in that** a velocity of the thermal plasma jet above the electrolyte crust is 0.5-2.5 m/min.

4. The method according to claim 1, **characterized in that** a distance from a point of plasma jet discharge to an electrolyte crust surface is 15 mm or less.

5. The method according to claim 1, **characterized in that** a width of the thermal plasma jet at the discharge point is 3-10 mm.

6. The method according to claim 1, **characterized in that** the discharge velocity of the thermal plasma jet is 600-1500 mm/sec.

## Patentansprüche

1. Das Verfahren zum Brechen der Elektrolytkruste mittels Trennschneiden in einer Reduktionszelle zur Herstellung von Aluminium ist **dadurch gekennzeichnet, dass** das Krustenschneiden und -brechen das thermische Schmelzen des Krustenmaterials mit einem Hochgeschwindigkeits-Hochtemperatur-Konzentrationsstrom der Wärmeenergie vom thermischen Plasmastrahl umfasst, für die ein gerichteter thermischer Plasmastrahl erzeugt und entlang einer vorbestimmten Bahn über der Elektrolytkruste geführt wird, das gebildete geschmolzene Material wird kontinuierlich aus der Aufprallzone des thermischen Plasmastrahls entfernt, um in der Elektrolytkruste einen Schlitz mit dem thermischen Plasmastrahl zu erzeugen, wobei der Schlitz ausreicht, um ein kontinuierliches Trennschneiden und Brechen der Kruste durchzuführen.

2. Das Verfahren nach dem Anspruch 1 ist **dadurch gekennzeichnet, dass** die Größen der in der Elektrolytkruste gebildeten Schlitze durch technologische Bearbeitungsvorgänge für die Reduktionszelle bestimmt werden, wobei die Schlitzbreite unter 25 mm beträgt.

3. Das Verfahren nach dem Anspruch 1 ist **dadurch gekennzeichnet, dass** die Geschwindigkeit des thermischen Plasmastrahls über der Elektrolytkruste 0,5-2,5 m/min beträgt.

4. Das Verfahren nach dem Anspruch 1 ist **dadurch gekennzeichnet, dass** der Abstand vom Plasmastrahlaustrittsstelle zu der Elektrolytkrustenoberfläche 15 mm oder weniger beträgt.

5. Das Verfahren nach dem Anspruch 1 ist **dadurch gekennzeichnet, dass** die Breite des thermischen Plasmastrahls an der Austrittsstelle 3-10 mm beträgt.

6. Das Verfahren nach dem Anspruch 1 ist **dadurch gekennzeichnet, dass** die Austrittsgeschwindigkeit des thermischen Plasmastrahls 600-1500 mm/s beträgt.

## Revendications

1. Procédé de rupture d'une croûte d'électrolyte par coupe de séparation dans un électrolyseur pour produire de l'aluminium, **caractérisé en ce que** la coupe et la rupture de la croûte comprennent la fusion thermique du matériau constituant la croûte au moyen d'un flux à haute température et haute vitesse d'énergie thermique de plasma thermique, à cet effet on forme un flux dirigé de plasma thermique et on le déplace au-dessus de la croûte d'électrolyte en suivant une trajectoire prédéterminée, le matériau fondu formé est évacué en continu de la zone d'action du flux de plasma thermique pour créer dans la croûte d'électrolyte une fente avec le flux de plasma thermique, qui est suffisante pour assurer en continu une coupe de séparation et destruction de la croûte.

2. Procédé selon la revendication 1, **caractérisé en ce que** les tailles de la fente formée dans la croûte d'électrolyte sont définies par des opérations de traitement technologique pour l'électrolyseur, dans lequel la largeur de fente est inférieure à 25 mm.

3. Procédé selon la revendication 1, **caractérisé en ce qu'**une vitesse du jet de plasma thermique au-dessus de la croûte d'électrolyte est de 0,5 à 2,5 m/min.

4. Procédé selon la revendication 1, **caractérisé en ce qu'**une distance d'un point de décharge de jet de plasma à la surface de la croûte d'électrolyte est de 15 mm ou moins.

5. Procédé selon la revendication 1, **caractérisé en ce qu'**une largeur du jet de plasma thermique au point de décharge est de 3 à 10 mm.

6. Procédé selon la revendication 1, **caractérisé en ce que** la vitesse de décharge du jet de plasma thermique est de 600-1500 mm/sec.
